Europäisches Patentamt

(19) European Patent Office

Office européen des brevets

(11) Publication number: **0 153 508**
**B1**

## EUROPEAN PATENT SPECIFICATION

(45) Date of publication of patent specification: **22.06.88**

(51) Int. Cl.⁴: **B 62 D 61/06**, B 60 Q 1/04

(21) Application number: **84201123.1**

(22) Date of filing: **27.04.84**

(60) Publication number of the earlier application in accordance with Art. 76 EPC:

(54) Three-wheeled motor vehicle with headlights.

(30) Priority: **28.04.83 JP 73752/83**
**28.04.83 JP 63059/83 u**

(43) Date of publication of application:
**04.09.85 Bulletin 85/36**

(45) Publication of the grant of the patent:
**22.06.88 Bulletin 88/25**

(84) Designated Contracting States:
**DE FR GB IT**

(56) References cited:
**DE-U-7 737 193**
**GB-A-2 093 417**

(73) Proprietor: **HONDA GIKEN KOGYO KABUSHIKI KAISHA**
**27-8, Jingumae, 6-chome**
**Shibuya-ku, Tokyo 150 (JP)**

(72) Inventor: **Irimajiri, Shoichiro**
**1-8-5, Kobe**
**Suzuka-shi Mie (JP)**
Inventor: **Komuro, Katsusuke**
**1-21-3 Wakaba-cho**
**Chofu-shi Tokyo (JP)**
Inventor: **Aikawa, Kunihiko**
**3-17-16, Chuo-cho**
**Higashikurume-shi Tokyo (JP)**

(74) Representative: **Leale, Robin George et al**
**FRANK B. DEHN & CO. Imperial House 15-19 Kingsway**
**London WC2B 6UZ (GB)**

Courier Press, Leamington Spa, England.

## Description

This invention relates to a three-wheeled motor vehicle, and more particularly to a small three-wheeled motor vehicle driven by an engine for normal highway operation.

One of the problems with a three-wheeled motor vehicle is that its small size has prevented easy selection of headlight positions that do not adversely affect the aerodynamics, light weight and mechanical strength of the vehicle. An example of a known three-wheeled vehicle having at least some of these difficulties is shown in GB—A—2093417, which discloses the preamble of claim 1.

The present invention is characterised in that each said recess extends forward from a position directly above its associated axle and each said recess and transparent cover having an uppermost portion located at substantially an uppermost portion of the respective wing.

An embodiment of the invention will now be described by way of example and with reference to the accompanying drawings in which:—

FIG. 1 is a prespective view of a three-wheeled motor vehicle according to the present invention;

FIG. 2 is a plan view of the vehicle shown in FIG. 1;

FIG. 3 is a side elevational view of the vehicle;

FIG. 4 is a cross-sectional view taken along line IV—IV of FIG. 2;

FIG. 5 is a cross-sectional view taken along line V—V of FIG. 3;

FIG. 6 is a fragmentary perspective view, partly broken away, of a driver's compartment, showing a control mechanism for a transmission in the vehicle shown in FIG. 1;

FIG. 7 is a plan view further illustrating the arrangement of the control mechanism shown in FIG. 6; and

FIG. 8 is a side elevational view showing the control mechanism of FIGS. 6 and 7.

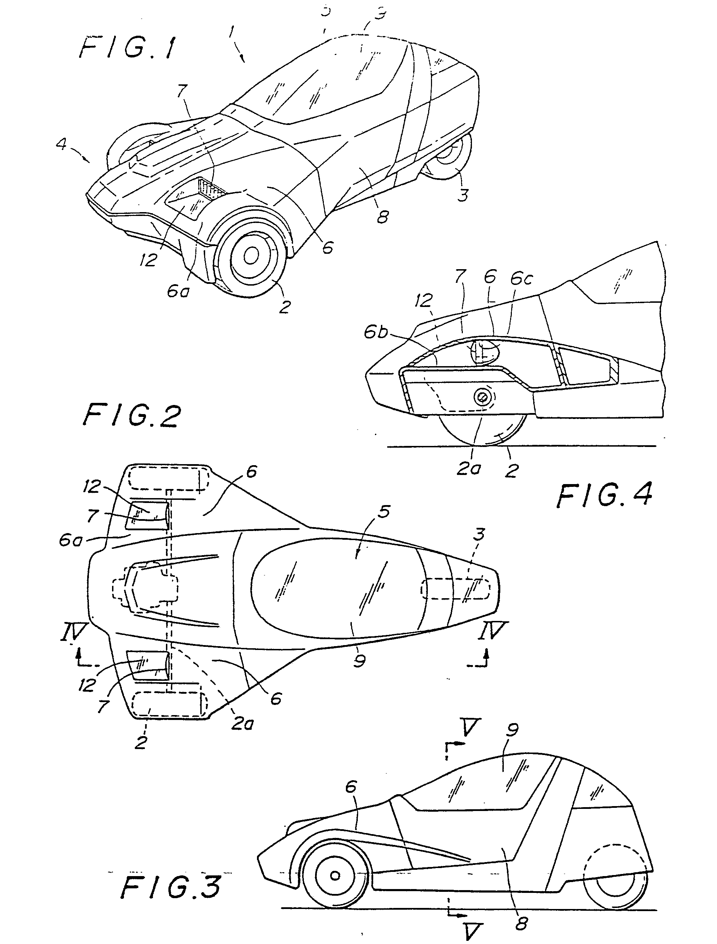

Referring to FIGS. 1 to 3, the three-wheeled motor vehicle comprises a vehicle body 1, a pair of laterally spaced front wheels 2 rotatably supported on the vehicle body 1, and a single rear wheel 3 rotatably supported on the vehicle body 1 and spaced rearward from the front wheels 2. The vehicle body 1 has a front engine compartment 4 and a rear driver's compartment 5. The vehicle body 1 also includes a pair of wide front wings 6 projecting laterally from the engine compartment 4 in opposite directions away from each other. As shown in FIG. 2, the front wings 6 cover the front wheels 2 and front wheel axles 2a connected to the front wheels 2. Each of the front wings 6 has a recess 6b in which headlights 7 are disposed, respectively, as illustrated in FIG. 4.

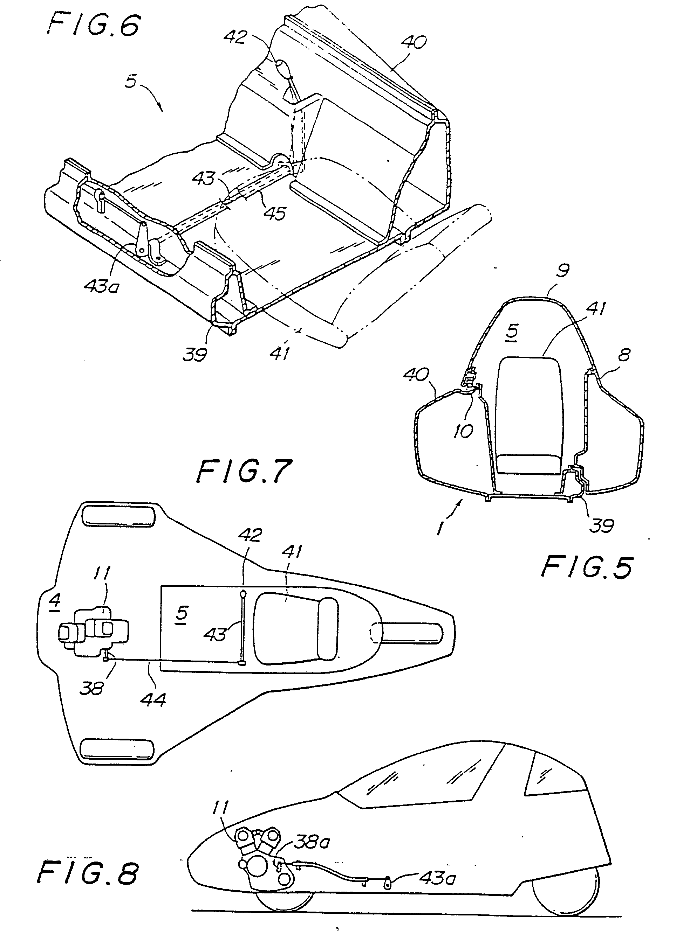

The vehicle body 1 has a door 8 including a windscreen 9. As shown in FIG. 5, the door 8 covers most of the left side of the compartment 5, the entire upper side of the compartment, and the upper portion of the right side thereof, and is hinged to the upper edge 10 of a right-hand side wall 40 of the vehicle body.

A V-type two cylinder engine 11 is disposed in the engine compartment 4 with its crank shaft extending laterally of the vehicle body 1. The engine 11 is mounted on the vehicle body 1 by an engine mounting structure (not shown). The engine includes a lower integral transmission case having an output drive shaft operatively coupled to the front wheels 2. Accordingly, the drive system of the illustrated three-wheeled motor vehicle is of the front-engine front-wheel-drive type.

The headlight attachment construction is illustrated in FIG. 4 as well as FIGS. 1 and 2. As shown, the tread between the front wheels 2 is selected to be considerably wider than the engine compartment 4. As described above, the front wings 6 project laterally from the engine compartment 4 in covering relation to the front wheels 2 and the axles 2a. The headlight attachement is the same on both sides and therefore only one side will be described in detail. The aforementioned recess 6b is defined at the region of the front slanted surface 6a of each front wing 6 that overlies the axle 2a and extends from a position directly above the axle 2a toward the front edge of the front wing 6. The front wing has an opening 6c extending rearwardly from the recess 6b, the headlight 7 being disposed in the opening 6c. The recess 6b is covered with a transparent cover 12 having a shape smoothly contiguous with the upper surface of the front wing 6.

With the above construction, the recesses 6b in which the lenses of the headlights 7 are exposed are located in portions of the front wings 6 that are relatively close to the centre-line of the vehicle body 1, and overlie the axles 2a of the front wheels 2. The recesses 6b are offset axially of the axles 2a from the front wheels 2, and hence it is not necessary to raise the front wings 6 to avoid interference between the recesses 6b and the front wheels 2. This fact, together with the fact that the headlights 7 are placed in the openings 6c rearwardly of the recesses 6b and below the outer profile of the slanted surfaces 6a of the front wings 6, makes it possible to reduce aerodynamic drag on the front wings 6.

The headlights 7 are positioned directly above the axles 2a, where the height of the slanted surfaces 6a is substantially at a maximum. The height of the headlights 7 above ground can therefore be as great as possible in a limited range, to provide a relatively large angle of illumination with respect to the road surface.

As shown in FIGS. 7 and 8, a gear shift spindle 38 projects from the left-hand side of the transmission case 31. A gear selection change or shift can be made in response to rotation of the gear shift spindle 38. As can readily be understood, a wide variety of engines with transmissions for motorcycles are usable for the illustrated engine construction.

As illustrated in FIGS. 5 and 6, the compartment of the monocoque vehicle body 1 has a left-hand side sill 39, whilst the right-hand side body member 40 is of a relatively greater height. The door 8 is of a gull-wing type hinged to the upper edge 10 of the side body member 40 and extends across to the side sill 39, covering the compartment 5. As shown in FIGS. 6 and 7, a gear shift lever 42 is disposed in the side body member 40 at a position in front of the driver's seat 41 so as not to interfere with the driver while getting into or out of the compartment 5, the shift lever 42 having a knob projecting into the compartment 5. Thus, the gear shift spindle 38 and the shift lever 42 are located on opposite sides, i.e. the left-hand and right-hand sides respectively, of the vehicle body 1. A rod 43 extends laterally of the vehicle body 1 across the compartment 5 and has its right-hand end connected to the lower end of the shift lever 42. The left-hand end of the rod 43 is coupled through a connector mechanism 44 to the gear shift spindle 38 of the transmission in the engine compartment 4. More specifically, the rod 43 is housed in a tubular attachment member 45 fixed to the floor of the compartment 5 os that the rod 43 is rotatably attached to the compartment floor. The connector mechanism 44 is composed of crank members 38a, 43a fixed respectively to the gear shift spindle 38 and the rod 43, and a tube-encased wire extending between and connected to the crank members 38a, 43a.

In operation, actuation of the shift lever 42 turns the rod 43 about its own axis to cause the connector mechanism 44 to turn the gear shift spindle 38 to carry out a gear shift in the transmission mechanism housed in the transmission case 31. Since the rod 43 and tubular attachment member 45 extend from one side to the other of the compartment 5 transversely of the vehicle body 1 and are fixed to the compartment floor, the rod 43 and member 45 can also serve as a vehicle body reinforcement for increasing the mechanical strength of the vehicle body 1 against torisional moment caused by external forces imposed on the vehicle body.

Although there have been describved what is at present considered to be the preferred embodiment of the present invention, it will be understood that the invention may be embodied in other specific forms without departing from the scope of the appended claims. The present embodiment is therefore to be considered in all aspects as illustrative, and not restrictive.

## Claims

1. A three-wheeled motor vehicle having two front wheels (2) with respective axles (2a) and a single rear wheel (3), comprising a vehicle body (1) having two front wings (6) covering the respective front wheels (2) and axles (2a), each of said two front wings (6) having a front downwardly slanting surface (6a) with a recess (6b) located closer to the centre-line of the vehicle body (1) than the associated front wheel (2), a headlight (7) mounted at the rear of each said recess (6b), and a transparent cover (12) conforming to the shape of the wing covers each said recess (6b) characterised in that each said recess (6b) extends forward from a position directly above its associated axle (2a), and each said recess and transparent cover (12) having an uppermost portion located at substantially an uppermost portion of the respective wing (6).

2. A vehicle as claimed in claim 1, wherein each said recess (6b) is provided with an opening (6c) at the rear thereof in which said headlight (7) is mounted.

## Patentansprüche

1. Dreirad-Motorfahrzeug, das zwei Vorderräder (2) mit zugeordneten Achsen (2a) und ein einziges Hinterrad (3) hat, und welches eine Karosserie (1) mit zwei vorderen Kotflügeln (6), die die zugeordneten Vorderräder (2) und Achsen (2a) überdekken, aufweist, wobei jeder der beiden vorderen Kotflügel (6) eine vorne nach unten schräg verlaufende Fläche (6a) mit einer Ausnehmung (6b) hat, die näher zu der Mittellinie der Fahrezeugkarosserie (1) als das zugeordnete Vorderrad (2) liegt, das Fahrzeug ferner einen Scheinwerfer (7) aufweist, der an der Rückseite jeder Ausnehmung (6b) angebracht ist, sowie eine transparente Abdekkung (12), die an die Form des die jeweilige Ausnehmung (6b) abdeckenden Kotflügels angepaßt ist, dadurch gekennzeichnet, daß jede Ausnehmung (6b) sich von einer Stelle direkt oberhalb der zugeordneten Achse (2a) nach vorne erstreckt, und daß jede Ausnehmung und jede transparente Abdeckung (12) einen zu oberst liegenden Abschnitt haben, der im wesentlichen an einem zu oberst liegenden Teil des zugeordneten Kotflügels (6) liegt.

2. Fahrzeug nach Anspruch 1, bei dem jede Ausnehmung (6b) mit einer Öffnung (6c) an der Hinterseite versehen ist, in der der Scheinwerfer (7) angebracht ist.

## Revendications

1. Véhicule à moteur à trois roues comportant deux roues avant (2) avec des essieux respectifs (2a) et une roue arrière unique (3), comprenant une carrosserie (1) de véhicule ayant deux ailes avant (6) recouvrant les roues avant (2) et les essieux (2a) respectifs, chacune desdites deux ailes avant (6) ayant une surface avant inclinée vers le bas (6a) avec une cavité (6b) située plus proche de l'axe médian de la carrosserie (1) du véhicule que la roue avant (2) associée, un phare (7) monté à l'arrière de chacune desdites cavités (6b) et un couvercle transparent 12 épousant la formed de l'aile recouvrant chacune desdites cavités (6b), caractérisé en ce que chacune desdites cavités (6b) s'étend vers l'avant depuis un point situé directement au dessus de son essieu associé (2a), et chaque cavité et couvercle transparent (12) ayant une partie, la plus haute, située à peu près à la partie la plus haute de l'aile correspondante (6).

2. Véhicule suivant la revendication 1, dans lequel chacune desdites cavités (6b) comporte une ouverture (6c) à sa partie arrière, dans laquelle est monté ledit phare (7).

FIG.1

FIG.2

FIG.3

FIG.4

*FIG.6*

*FIG.7*

*FIG.5*

*FIG.8*